# EUROPÄISCHE PATENTSCHRIFT

(11) **EP 4 327 137 B1**
(45) Veröffentlichungstag und Bekanntmachung des Hinweises auf die Patenterteilung: **27.08.2025**
(21) Anmeldenummer: 22732139.5
(22) Anmeldetag: 03.06.2022
(51) Int. Cl.: G01V 3/10, B61L 1/16, B61L 1/08

(54) **SENSOREINRICHTUNG, SCHIENENFAHRZEUG UND SENSORANORDNUNG**
SENSOR DEVICE, RAIL VEHICLE AND SENSOR ASSEMBLY
DISPOSITIF DE DÉTECTION, VÉHICULE FERROVIAIRE ET ENSEMBLE CAPTEUR

(30) Priorität: 25.06.2021 DE 102021206585
(43) Veröffentlichungstag der Anmeldung: 28.02.2024
(73) Patentinhaber: Siemens Mobility GmbH, 81739 München (DE)
(72) Erfinder: FREISE, Rainer, 38124 Braunschweig (DE)
(74) Vertreter: Siemens Patent Attorneys
(86) Internationale Anmeldenummer: PCT/EP2022/065212
(87) Internationale Veröffentlichungsnummer: WO 2022/268484

(56) Entgegenhaltungen:
- DE-A1- 1 605 427
- DE-A1- 102014 207 409
- DE-A1- 102016 201 896

## Beschreibung

Die Erfindung betrifft eine Sensoreinrichtung zum Erfassen einer Magnetfeldänderung, die durch ein sich der Sensoreinrichtung annäherndes Objekt verursacht wird.

Derartige Sensoreinrichtungen werden beispielsweise in eisenbahntechnischen Anlagen eingesetzt, um sich annähernde oder vorbeifahrende Schienenfahrzeuge zu erkennen. Beispielsweise sind aus der WO 2017/220306 A1 und der WO 2019/096541 A1 ähnliche Sensoreinrichtungen bekannt. Allerdings sind die bekannten Sensoreinrichtungen eher für die Detektion von Objekten im Nahbereich ausgebildet, so dass sie für die Detektion von Objekten in größerem Abstand weniger geeignet sind.

In der DE 10 2014 207 409 A1 ist eine Sensoreinrichtung zum Erfassen einer Magnetfeldänderung beschrieben.

Es ist die Aufgabe der vorliegenden Erfindung, eine Sensoreinrichtung der eingangs genannten Art bereitzustellen, die auch für die Detektion von Objekten in größerem Abstand geeignet ist und dabei eine hohe Zuverlässigkeit und Störungsunanfälligkeit aufweist.

Die Aufgabe wird erfindungsgemäß durch die eingangs genannte Sensoreinrichtung dadurch gelöst, dass die Sensoreinrichtung wenigstens einen Sendeschwingkreis und wenigstens ein Paar aus zwei Empfangsschwingkreisen umfasst, wobei die Empfangsschwingkreise jeweils eine Empfangsspule aufweisen, wobei die Empfangsspule des einen Empfangsschwingkreises vor und die Empfangsspule des anderen Empfangsschwingkreises hinter einer Sendespule des Sendeschwingkreises bezogen auf dessen Längsrichtung angeordnet sind und jede Empfangsspule des jeweiligen Paares mit einem im Wesentlichen gleichen Abstand zur Sendespule angeordnet ist, und wobei die Empfangsschwingkreise des wenigstens einen Paares elektrisch parallelgeschaltet sind.

Die erfindungsgemäße Lösung hat den Vorteil, dass sie eine Kompensation für störende Wechselfelder im Fernbereich bietet. Gleichzeitig führt sie auch zur Reduktion störender magnetischer Wechselfelder im Nahbereich.

Mit der erfindungsgemäßen Sensoreinrichtung können beispielsweise Metallflächen und flächige Materialien mit hoher magnetischer Permeabilität zuverlässig erkannt werden. Zusätzlich bietet die erfindungsgemäße Sensoreinrichtung durch ihren redundanten Aufbau und die damit verbundene Parallelschaltung eine reduzierte Ausfallwahrscheinlichkeit. Wenn nämlich einer der Empfangsschwingkreise ausfällt, kann der wenigstens eine andere Empfangsschwingkreis dies kompensieren. Durch den gleichen Abstand der paarweise angeordneten Empfangsspulen können die Wechselfelder im Fernbereich besonders gut kompensiert werden. Störende Wechselfelder im Nahbereich hingegen wirken sich lediglich auf eine der beiden Empfangsspulen des wenigstens einen Paares aus und werden somit kompensiert.

Die erfindungsgemäße Sensoreinrichtung kann beispielsweise im Eisenbahnbereich bei der Abstandserkennung eingesetzt werden.

Die erfindungsgemäße Lösung kann durch vorteilhafte Ausgestaltungen weiterentwickelt werden, die im Folgenden beschrieben sind.

So können die Empfangsschwingkreise, insbesondere eines Paares, baugleich ausgebildet sein. Baugleich bedeutet hier zum Einen, dass sie aus den gleichen Komponenten, wie beispielsweise Empfangsspule, Kondensator und Widerstand, bestehen und zum Anderen, dass diese Einzelteile auch gleich ausgebildet sind, d. h. beispielsweise die gleichen Stärken wie Impedanz, Kapazität und Widerstand haben. Dies hat den Vorteil, dass nur eine Art von Empfangsschwingkreis vorgehalten werden muss und diese auch kostengünstig in größeren Mengen bestellt werden kann. Weiterhin reagieren die Empfangsschwingkreis gleich, so dass eine gute Kompensation von weit entfernten Störfeldern stattfinden kann. Alternativ können auch nur einzelne Teile wie beispielsweise die Empfangsspulen baugleich ausgebildet sein.

Um die Kompensationsfähigkeit für Störfelder weiter zu verbessern, können die Empfangsspulen eines Paares im Wesentlichen spiegelsymmetrisch zur Sendespule angeordnet sein.

Zusätzlich sind insbesondere bei mehreren Paaren von Empfangsspulen diese punktsymmetrisch angeordnet. Dadurch sind die Empfangsspulen gleichmäßig im magnetischen Wechselfeld des Sendeschwingkreise 2 angeordnet.

Um die Ausfallwahrscheinlichkeit der erfindungsgemäßen Sensoreinrichtung zu verbessern, kann die Sendeeinrichtung mehrere Paare aus Empfangsschwingkreisen aufweisen. Dabei können alle Empfangsschwingkreise zueinander elektrisch parallelgeschaltet sein. Alternativ kann ein erster Teil der Empfangsschwingkreise zueinander elektrisch parallel zueinander parallelgeschaltet sein und wenigstens ein zweiter Teil der Empfangsschwingkreise zueinander ebenfalls elektrisch parallelgeschaltet sein. Durch die Ausführung mit zwei Teilen, die auch als Kanäle bezeichnet werden können, kann beispielsweise eine Richtungserkennung durch sich überlappende Signale realisiert werden.

Bei der zuvor beschriebenen Variante mit mehreren Teilen von Empfangsschwingkreisen, die man auch als unterschiedliche Kanäle bezeichnen könnte, kann zusätzlich jeder Teil der Empfangsschwingkreise einen separaten Sendeschwingkreis aufweisen.

Die Erfindung betrifft weiterhin ein Schienenfahrzeug, wie beispielsweise eine Lokomotive, einen Fernverkehrszug, einen Nahverkehrszug, eine U-Bahn oder eine Straßenbahn. Die Sensoranordnung umfasst wenigstens ein Objekt und wenigstens eine Sensoreinrichtung zum Erfassen einer Magnetfeldänderung, die durch das sich der Sensoreinrichtung annähernde Objekt verursacht wird. Erfindungsgemäß ist die Sensoreinrichtung nach einer der zuvor beschriebenen Ausführungsformen ausgebildet. Die erfindungsgemäße Sensoreinrichtung kann an dem Schienenfahrzeug beispielsweise dazu genutzt werden, eine Annäherung und damit einen Abstand zu einem Bahnsteig oder einer anderen Haltemarke zu detektieren. Dazu kann entweder die Sensoreinrichtung oder das Objekt ortsfest angebracht werden und das jeweils andere an dem Schienenfahrzeug.

In einer vorteilhaften Ausgestaltung der erfindungsgemäßen Sensoranordnung kann das Objekt aus einem plattenartigen flächigen Material mit hoher magnetischer Permeabilität ausgebildet sein. Dieses Material kann beispielsweise eine Metallplatte sein. Dies hat den Vorteil, dass ein derartiges Material besonders gut und zuverlässig von der erfindungsgemäßen Sensoreinrichtung detektiert werden kann.

Im Folgenden wird die Erfindung mit Bezug auf die beigefügten Zeichnungen näher erläutert. Es zeigen:
- FIG. 1: eine schematische Darstellung einer ersten beispielhaften Ausführungsform einer erfindungsgemäßen Sensoreinrichtung in einer Ansicht von vorne;
- FIG. 2: die erfindungsgemäße Sensoreinrichtung aus FIG. 1 in einer Draufsicht;
- FIG. 3: ein schematisches Schaltbild der beispielhaften Sensoreinrichtung aus den Figuren 1 und 2;
- FIG. 4: eine schematische Darstellung einer weiteren beispielhaften Ausführungsform einer erfindungsgemäßen Sensoreinrichtung;
- FIG. 5-8: jeweils weitere beispielhaften Ausführungsformen von erfindungsgemäßen Sensoreinrichtungen;
- FIG. 9: eine schematische Darstellung einer beispielhaften Ausführungsform eines erfindungsgemäßen Schienenfahrzeugs.

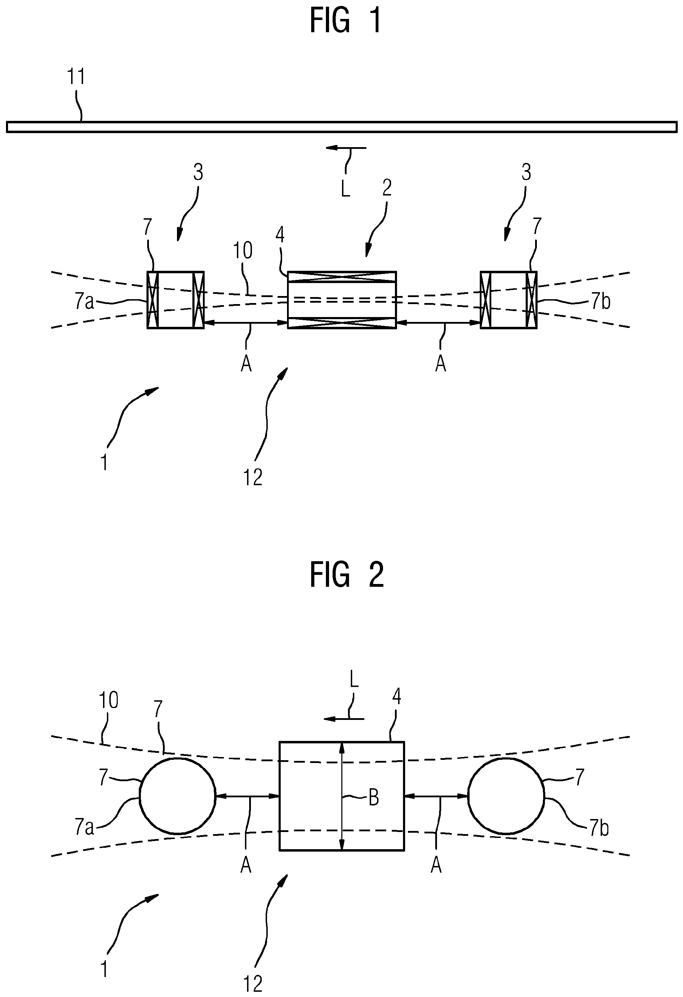

Zunächst wird die beispielhafte Ausführungsform einer erfindungsgemäßen Sensoreinrichtung in den FIG. 1-3 beschrieben.

Die beispielhafte Ausführungsform in den FIG. 1-3 einer erfindungsgemäßen Sensoreinrichtung 1 umfasst einen Sendeschwingkreis 2 und zwei paarweise angeordnete Empfangsschwingkreise 3.

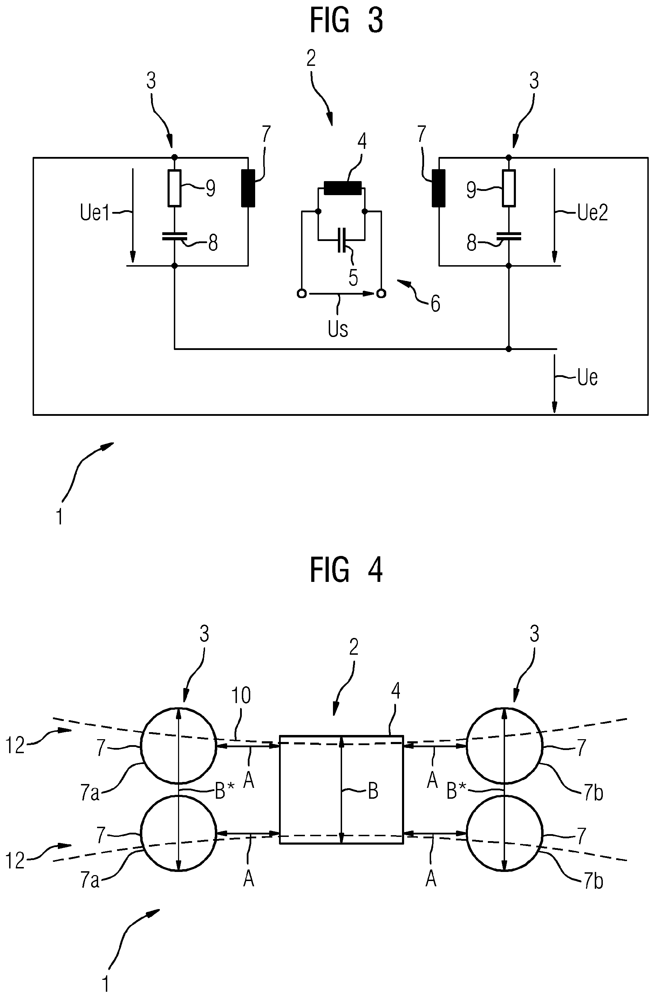

Wie im Schaltbild in FIG. 3 ersichtlich, besteht der Sendeschwingkreis 2 aus einer Sendespule 4 und einem Sendekondensator 5. Im Betrieb wird der Sendeschwingkreis 2 von einer Spannungsquelle 6 mit einer Wechselspannung Us versorgt, die den Sendeschwingkreis 2 anregt.

Die Empfangsschwingkreise 3 weisen jeweils eine Empfangsspule 7, einen Empfangskondensator 8 und einen Dämpfungswiderstand 9 auf. Die beiden Empfangsschwingkreise 3 sind zueinander parallelgeschaltet. In den FIG. 1 und 2 sind für eine vereinfachte Darstellung lediglich die Sendespule 4 des Sendeschwingkreises 2 und die Empfangsspulen 7 der Empfangsschwingkreise 3 dargestellt. Trotzdem entspricht der Aufbau selbstverständlich dem im Schaltbild in FIG. 3 dargestellten.

Im Betrieb generiert die Sendespule 4 des Sendeschwingkreises 2 ein überwiegend horizontal ausgerichtetes magnetisches Wechselfeld 10, dessen prinzipieller Feldlinienverlauf in den FIG. 1 und 2 angedeutet ist. In FIG. 1 ist die prinzipielle Spulenanordnung im horizontalen Querschnitt darstellt. Die Sendespule 4 ist mittig zwischen den Empfangsspulen 7 angeordnet. In einer Längsrichtung L der Sendespule 4 ist die eine Empfangsspule 7 vor der Sendespule 4 und die andere Empfangsspule 7 hinter der Sendespule 4 angeordnet. Zur einfacheren Unterscheidung der Empfangsspulen 7 ist die vor der Sendespule 4 angeordnete Empfangsspule 7 zusätzlich mit dem Bezugszeichen 7a bezeichnet und die dahinter liegende Empfangsspule 7 mit dem Bezugszeichen 7b. Die beiden gedämpften Empfangsschwingkreise 3 sind wie in FIG. 3 parallelgeschaltet, so dass sich aufgrund der gegensinnigen magnetischen Durchflutung jeweils die Empfangsspannung Ue1, Ue2 ergibt. Aus der Parallelschaltung der Empfangsschwingkreise 3 ergibt sich eine gesamte Empfangsspannung Ue für die Sensoreinrichtung 1.

Da die Empfangsspulen 3 im Wesentlichen spiegelsymmetrisch zur Sendespule 4 und damit mit gleichem Abstand A angeordnet sind, werden diese von genügend weit entfernten magnetischen Störfeldern von Störquellen in gleicher Weise beeinflusst. Durch die gleiche Beeinflussung werden diese im Endeffekt in vorteilhafter Weise unterdrückt. Die Empfangsspulen 3 sind in der erfindungsgemäßen Sensoreinrichtung 1 immer paarweise angeordnet. Jedes Paar ist in den Figuren mit dem Bezugszeichen 12 gekennzeichnet.

Bei der beispielhaften Ausführungsform in den FIG. 1-3 ergibt sich im Betrieb beispielsweise eine Empfangsspannung von etwa 100 Millivolt in den beiden Empfangsschwingkreisen 3.

In FIG. 1 ist weiterhin ein sich der Sensoreinrichtung 1 annäherndes Objekt 11 in Form einer Metallplatte dargestellt, die sich hier über der gesamten Sensoreinrichtung 1 befindet. Das Objekt 11 kann alternativ auch aus einem beliebigen flächigen Material mit hoher magnetischer Permeabilität bestehen, das die Sensoreinrichtung 1 beeinflusst. Durch die Auswirkung dieses Objekts 11 werden die magnetischen Feldlinien der Sensoreinrichtung 1 beeinflusst, d. h. gekrümmt oder gedämpft, so dass sich die Empfangsspannung Ue verändert. Mittels dieser Veränderung der Empfangsspannung Ue kann das Objekt 11 detektiert werden.

In FIG. 2 ist die Sensoreinrichtung 1 von oben dargestellt. Wie auch in FIG. 1 sind lediglich die Sendespule 4 und die Empfangsspulen 7 dargestellt. In den FIG. 1 und 2 sind die Sendespule 2 und die Empfangsspulen 7 beispielhaft zylindrisch, also in der Draufsicht rund, dargestellt. Es sind selbstverständlich auch andere Formen möglich. In FIG. 2 bezieht sich die Darstellung der magnetischen Feldlinien des Wechselfeldes 10 auf den horizontalen Feldlinienanteil. Die beiden Empfangsspulen 7 haben bei der beispielhaften Ausführungsform in FIG. 1 vorteilhafterweise den gleichen Aufbau, die gleiche Impedanz und haben idealerweise eine ähnlich hohe Ausgangsspannung, da die Empfindlichkeit der Sensoreinrichtung 1 abhängig ist von der eingestellten Empfangsspannung Ue. Die Gesamtimpedanz des Empfangssystems aus den Empfangsschwingkreisen 3 halbiert sich dadurch. Wird nur eine der Empfangsspulen 7 und damit der Empfangsschwingkreise 3 im Nahfeld durch eine Störgröße beeinflusst, so ist die Auswirkung dieser Störgröße bei der erfindungsgemäßen Sensoreinrichtung 1 halbiert, weil die jeweils andere Empfangsspule 7 des Paares 12 der Empfangsschwingkreise 7 durch den räumlichen Abstand nicht betroffen ist.

Die beiden Empfangsspulen 7 des Paares 12 sind mit einem im Wesentlichen gleichen Abstand A zu der Sendespule 4 angeordnet. Quer zur Längsrichtung L weist die Sendespule 4 bei der Ausführungsform in den FIG. 1-3 eine Breite B auf. Die in der Mitte positionierte und als Teil des Sendeschwingkreises 2 verkabelte Sendespule 4 induziert im Betrieb in die parallelgeschalteten, gedämpften Empfangsschwingkreise 3 die Empfangsspannungen Ue1 und Ue2. Die Empfangsspannungen Ue1 und Ue2 sind in etwa gleich hoch und ergeben durch die Parallelschaltung eine ähnlich hohe Ausgangsspannung Ue. Dadurch wird eine gleichmäßige Störfestigkeit und -empfindlichkeit der erfindungsgemäßen Sensoreinrichtung 1 im Nahfeld sichergestellt.

Im Folgenden wird die in FIG. 4 dargestellte weitere beispielhafte Ausführungsform der erfindungsgemäßen Sensoreinrichtung 1 beschrieben. Der Einfachheit halber wird lediglich auf die Unterschiede zur Ausführungsform in den Fig. 1-3 eingegangen.

Bei der Ausführungsform in FIG. 4 ist die Anzahl der Empfangsspulen 7 verdoppelt worden. Die Sensoreinrichtung 1 in FIG. 4 umfasst daher zwei Paar Empfangsspulen 7. Jede Empfangsspule 7 liefert auch hier ungefähr eine gleich hohe Ausgangsspannung. Die Empfangsspulen 7 sind hier nur der Übersichtlichkeit halber nah beieinander positioniert und können durchaus einen größeren Abstand zueinander haben. Ähnlich wie bei der Ausführungsform in den FIG. 1-3 kompensieren die vorderen Empfangsspulen 7a und die hinteren Empfangsspulen 7b mögliche magnetische Wechselfelder im Fernfeld, d. h. in größerer Entfernung. Eine im Nahfeld, d. h. in der Nähe, auftretende Störgröße wird nur eine oder ein Teil der Empfangsspulen 7 durchsetzen, so dass die Störwirkung auf das eigentliche Empfangssignal im Vergleich zur Ausführungsform in den FIG. 1-3 abnimmt. Somit nimmt die Störanfälligkeit bei dieser Ausführungsform sogar noch ab.

Durch die Erhöhung der Anzahl der Empfangsspulen 7 bei der Ausführungsform in FIG. 4 ergibt sich zusätzlich eine Reduzierung der Ausfallwahrscheinlichkeit gegenüber der Ausführungsform in den FIG. 1-3. Beispielsweise eine Unterbrechung der Zuleitung zu einem Empfangsschwingkreis 7 oder eine andere Störung eines Empfangsschwingkreises 7 führt in Summe nicht sofort zum Ausfall der Sensoreinrichtung 1. Auch eine Änderung einer Empfangsspuleninduktivität und damit der Frequenz eines der Empfangsschwingkreise 3 führt zu einer gegenüber der Ausführungsform in den Fig. 1-3 reduzierten Frequenzänderung des Gesamtempfangsschwingkreises und damit zu einer höheren Verfügbarkeit der erfindungsgemäßen Sensoreinrichtung 1.

Die Breite B der Sendespule 4 ist bei der Ausführungsform in Fig. 4 größer als eine Breite B* über alle Empfangsspulen 7. Dadurch trifft das magnetische Wechselfeld 10 die Empfangsspulen 7 nicht überall gleich. Um dies gleichmäßig zu verteilen, sind die Empfangsspulen im Wesentlichen punktsymmetrisch zur Sendespule 4 angeordnet.

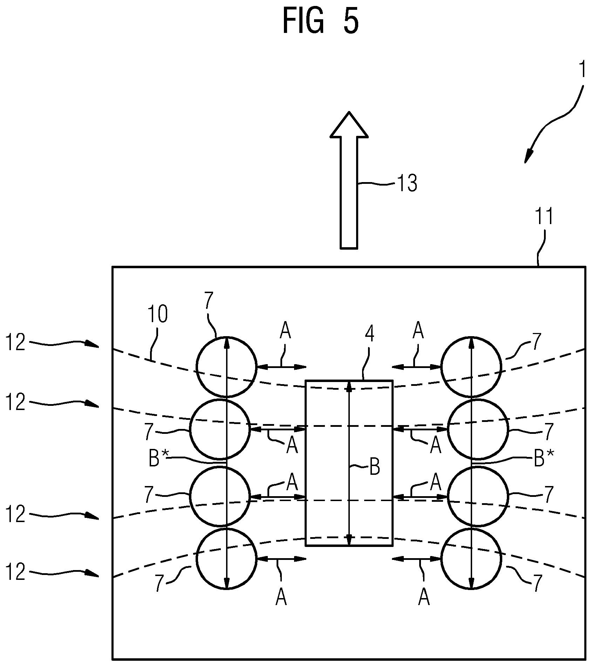

Im Folgenden werden die weiteren beispielhaften Ausführungsformen der erfindungsgemäßen Sendeeinrichtung 1 in den FIG. 5-8 beschrieben. Der Einfachheit halber wird jeweils nur auf die Unterschiede zu den vorherigen Ausführungsformen eingegangen.

Bei der Ausführungsform in FIG. 5 ist die Anzahl der Empfangsspulen 7 gegenüber der Ausführungsform in FIG. 4 erneut verdoppelt worden. Da jede Empfangsspule 7 eine ungefähr gleich hohe Ausgangsspannung liefert, sind die Abstände A der außen liegenden Empfangsspulen 7 aufgrund des sich abschwächenden Magnetfeldes 10 etwas reduziert bzw. angepasst worden. Der Abstand A eines Paares 12 ist also im Wesentlichen proportional zur Stärke des Magnetfeldes 10. Auch hier gilt wie bei der Ausführungsform in FIG. 4, dass der Einfluss einer Störgröße im Nahbereich, die nur eine Empfangsspule 7 durchsetzt, durch die größere Anzahl von Empfangsschwingkreisen 3 weiter reduziert wird auf das eigentliche Nutzempfangssignal in der Spannung Ue.

In FIG. 5 ist über der Sensoreinrichtung 1 das zu detektierende Objekt 11 in Form einer flächigen Metallplatte dargestellt. Das Objekt 11 ist generell für die Sensoreinrichtung 1 so dimensioniert, dass alle Empfangsspulen 7 im Wesentlichen gleichmäßig überdeckt werden können. Eine relative Bewegungsrichtung 13 des Objekts 11 ist durch einen Pfeil dargestellt. Selbstverständlich kann sich entweder die Sensoreinrichtung 1 oder das Objekt 11 bewegen. Die Dimension des Objekts 11 ist so ausgelegt, dass alle Empfangsspulen 7 genügend von dem Objekt 11 überdeckt werden, um durch die Feldverzerrung eine ähnlich hohe Empfangsspannung Ue zu erzeugen.

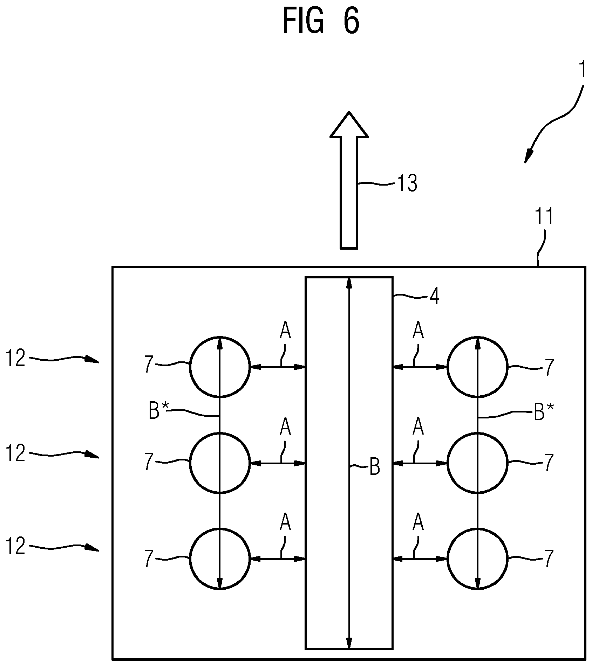

Bei der weiteren beispielhaften Ausführungsform in FIG. 6 ist eine Sendespule 4 verwendet, deren Breite B größer ist als in den anderen Ausführungsformen. Die Sendespule 4 ragt über die Paare 12 von Empfangsspulen 7 hinaus, die Breite B ist also größer als die Breite B*. Das Magnetfeld 10 ist hier im mittleren Bereich so gleichmäßig, dass die jeweils drei Empfangsspulenpaare 12 auf jeder Seite den gleichen Abstand A zur Sendespule 4 aufweisen. Je nach Breite B der Sendespule 4 können weitere Empfangsspulenpaare 12 hinzugefügt werden.

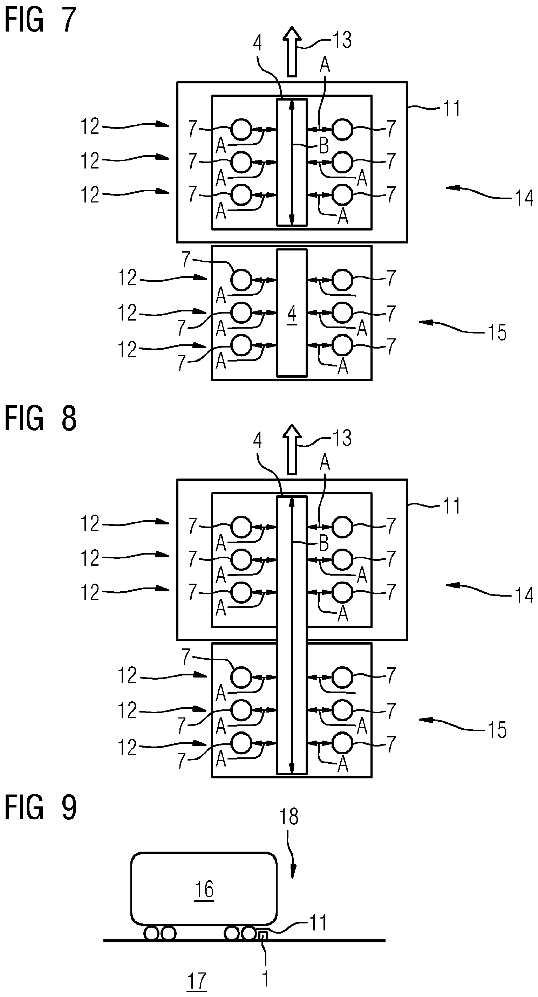

Bei der weiteren beispielhaften Ausführungsform der erfindungsgemäßen Sensoreinrichtung 1 in FIG. 7 ist der Aufbau ähnlich wie bei der Ausführungsform in FIG. 6. Allerdings ist die Sensoreinrichtung 1 hier als ein zweikanaliges System aufgebaut mit einem ersten Teil 14 aus drei Paaren 12 von Empfangsschwingkreisen 3 und einem zweiten Teil 15 von wiederum drei Paaren 12 von Empfangsschwingkreisen 3. Jeder Teil 14, 15 von Empfangsschwingkreisen 3 weist eine separate Sendespule 4 auf.

Auch in FIG. 8 ist als weitere Ausführungsform eine zweikanalige Sensoreinrichtung 1 mit einem ersten Teil 14 und einem zweiten Teil 15 dargestellt. Allerdings ist hier nur eine gemeinsame Sendespule 4 vorhanden.

FIG. 9 zeigt ein erfindungsgemäßes Schienenfahrzeug 16, an dem das Objekt 11 in Form einer metallischen Platte angebracht ist. An einer festen streckenseitigen Einrichtung 17, wie beispielsweise dem Gleisbett oder einem Gebäude, ist die erfindungsgemäße Sensoreinrichtung 1, z. B. nach einer der zuvor beschriebenen Ausführungsformen, angebracht. Das Schienenfahrzeug 16 fährt bei seiner Fahrt beispielsweise über die Sensoreinrichtung 1 hinweg. Bei einer Anfahrt des Schienenfahrzeugs 16 an die Sensoreinrichtung 1 wird das sich annähernde Objekt 11 und damit das Schienenfahrzeug 16 von der Sensoreinrichtung 1 erkannt. Die Sensoreinrichtung 1 und das Objekt 11 bilden zusammen eine Sensoranordnung 18 aus. Die Sensoreinrichtung 1 und das Objekt 11 werden so angeordnet, dass sie eine Relativbewegung zueinander ausführen. Dabei erkennt die Sensoreinrichtung 1 das Objekt 11, sobald ein Abstand zwischen ihnen unter einem Grenzwert ist. So kann beispielsweise die Überfahrt oder Annäherung des Schienenfahrzeugs 16 zur Sensoreinrichtung 1 erfasst werden. Dadurch kann z. B. erkannt werden, wenn das Schienenfahrzeug 16 in einen Gleisabschnitt einfährt.

## Patentansprüche

1. Sensoreinrichtung (1) zum Erfassen einer Magnetfeldänderung, die durch ein sich der Sensoreinrichtung (1) annäherndes Objekt (11) verursacht wird,
die Sensoreinrichtung (1) umfasst wenigstens einen Sendeschwingkreis (2) und wenigstens ein Paar (12) aus zwei Empfangsschwingkreisen (3), wobei die Empfangsschwingkreise (3) jeweils eine Empfangsspule (7) aufweisen,
wobei die Empfangsspule (7a) des einen Empfangsschwingkreises (3) vor und die Empfangsspule (7b) des anderen Empfangsschwingkreises (3) hinter einer Sendespule (4) des Sendeschwingkreises (2) bezogen auf dessen Längsrichtung (L) angeordnet sind und jede Empfangsspule (7) des jeweiligen Paares (12) mit einem im Wesentlichen gleichen Abstand (A) zur Sendespule (4) angeordnet ist,
**dadurch gekennzeichnet , dass**
die Empfangsschwingkreise (3) des wenigstens einen Paares (12) elektrisch parallelgeschaltet sind.

2. Sensoreinrichtung (1) nach Anspruch 1,
**dadurch gekennzeichnet , dass**
die Empfangsschwingkreise (3), insbesondere eines Paares (12), baugleich ausgebildet sind.

3. Sensoreinrichtung (1) nach Anspruch 1 oder 2,
**dadurch gekennzeichnet , dass**
die Empfangsspulen (7) eines Paares (12) im Wesentlichen spiegelsymmetrisch zur Sendespule (4) angeordnet sind.

4. Sensoreinrichtung (1) nach einem der oben genannten Ansprüche,
**dadurch gekennzeichnet , dass**
die Sensoreinrichtung (1) mehrere Paare (12) aus Empfangsschwingkreisen (3) aufweist.

5. Sensoreinrichtung (1) nach Anspruch 4,
**dadurch gekennzeichnet , dass**
alle Empfangsschwingkreise (3) zueinander elektrisch parallelgeschaltet sind.

6. Sensoreinrichtung (1) nach Anspruch 4,
**dadurch gekennzeichnet , dass**
ein erster Teil (14) der Empfangsschwingkreise (3) zueinander elektrisch parallelgeschaltet sind und wenigstens ein zweiter Teil (15) der Empfangsschwingkreise (3) zueinander ebenfalls elektrisch parallelgeschaltet sind.

7. Sensoreinrichtung (1) nach Anspruch 6,
**dadurch gekennzeichnet , dass**
jeder Teil (14, 15) der Empfangsschwingkreise (3) einen separaten Sendeschwingkreis (2) aufweist.

8. Schienenfahrzeug (17)
**dadurch gekennzeichnet , dass**
das Schienenfahrzeug (17) wenigstens eine Sensoreinrichtung (1) nach einem der oben genannten Ansprüche umfasst.

9. Sensoranordnung (18)
mit wenigstens einem Objekt (11) und mit wenigstens einer Sensoreinrichtung (1) zum Erfassen einer Magnetfeldänderung, die durch das sich der Sensoreinrichtung (1) annäherndes Objekt (11) verursacht wird,
**dadurch gekennzeichnet , dass**
die Sensoreinrichtung (1) nach einem der oben genannten Ansprüche 1 bis 7 ausgebildet ist.

10. Sensoranordnung (18) nach Anspruch 9,
**dadurch gekennzeichnet , dass**
das Objekt (11) aus einem plattenartigen flächigen Material mit hoher magnetischer Permeabilität ausgebildet ist.

## Claims

1. Sensor facility (1) for capturing a change in magnetic field that is caused by an object (11) approaching the sensor facility (1),
the sensor facility (1) comprises at least one transmit oscillating circuit (2) and at least one pair (12) of two receive oscillating circuits (3), wherein the receive oscillating circuits (3) each have a receive coil (7), wherein the receive coil (7a) of the one receive oscillating circuit (3) is arranged upstream of a transmit coil (4) of the transmit oscillating circuit (2) in relation to the longitudinal direction (L) thereof, and the receive coil (7b) of the other receive oscillating circuit (3) is arranged downstream, and each receive coil (7) of the respective pair (12) is arranged at a substantially identical distance (A) from the transmit coil (4),
**characterised in that**
the receive oscillating circuits (3) of the at least one pair (12) are connected in parallel from an electrical perspective.

2. Sensor facility (1) according to claim 1,
**characterised in that**
the receive oscillating circuits (3), in particular of one pair (12), are embodied with identical construction.

3. Sensor facility (1) according to claim 1 or 2,
**characterised in that**
the receive coils (7) of one pair (12) are arranged substantially with mirror symmetry in relation to the transmit coil (4).

4. Sensor facility (1) according to one of the claims cited above,
**characterised in that**
the sensor facility (1) has multiple pairs (12) of receive oscillating circuits (3).

5. Sensor facility (1) according to claim 4,
**characterised in that**
all receive oscillating circuits (3) are connected in parallel with one another from an electrical perspective.

6. Sensor facility (1) according to claim 4,
**characterised in that**
a first part (14) of the receive oscillating circuits (3) are connected in parallel with one another from an electrical perspective and at least a second part (15) of the receive oscillating circuits (3) are also connected in parallel with one another from an electrical perspective.

7. Sensor facility (1) according to claim 6,
**characterised in that**
each part (14, 15) of the receive oscillating circuits (3) has a separate transmit oscillating circuit (2).

8. Rail vehicle (17)
**characterised in that**
the rail vehicle (17) comprises at least one sensor facility (1) according to one of the claims cited above.

9. Sensor arrangement (18)
with at least one object (11) and with at least one sensor facility (1) for capturing a change in magnetic field that is caused by an object (11) approaching the sensor facility (1), **characterised in that**
the sensor facility (1) is embodied according to one of claims 1 to 7 cited above.

10. Sensor arrangement (18) according to claim 9,
**characterised in that**
the object (11) is embodied as made of a plate-like flat material with high magnetic permeability.

## Revendications

1. Dispositif (1) capteur pour la détection d'une variation du champ magnétique, qui est provoquée par un objet (11) se rapprochant du dispositif (1) capteur,
le dispositif (1) capteur comprend au moins un circuit (2) oscillant émetteur et au moins une paire (12) de circuits (3) oscillants récepteurs, dans lequel les circuits (3) oscillants récepteurs ont chacun une bobine (7) de réception,
dans lequel la bobine (7a) de réception du un circuit (3) oscillant récepteur est disposée devant et la bobine (7b) de réception de l'autre circuit (3) oscillant récepteur est disposée derrière une bobine (4) d'émission du circuit (2) oscillant émetteur rapporté à sa direction (L) longitudinale et chaque bobine (7) de réception de la paire (12) respective est disposée à sensiblement une même distance (A) de la bobine (4) d'émission,
**caractérisé en ce que**
les circuits (3) oscillants récepteurs de la au moins une paire (12) sont montés électriquement en parallèle.

2. Dispositif (1) capteur suivant la revendication 1,
**caractérisé en ce que**
les circuits (3) oscillants récepteurs, en particulier d'une paire (12), sont constitués en ayant une même construction.

3. Dispositif (1) capteur suivant la revendication 1 ou 2,
**caractérisé en ce que**
les bobines (7) de réception d'une paire (12) sont disposées sensiblement, de manière symétrique comme en un miroir par rapport à la bobine (4) d'émission.

4. Dispositif (1) capteur suivant l'une des revendications précédentes,
**caractérisé en ce que**
le dispositif (1) capteur a plusieurs paires (12) de circuits (3) oscillants récepteurs.

5. Dispositif (1) capteur suivant la revendication 4,
**caractérisé en ce que**
tous les circuits (3) oscillants récepteurs sont montés en parallèle électriquement les uns par rapport aux autres.

6. Dispositif (1) capteur suivant la revendication 4,
**caractérisé en ce qu'**
une première partie (14) des circuits (3) oscillants récepteurs sont montés électriquement en parallèle les uns par rapport aux autres et au moins une deuxième partie (15) des circuits (3) oscillants récepteurs sont montés également électriquement en parallèle les uns par rapport aux autres.

7. Dispositif (1) capteur suivant la revendication 6,
**caractérisé en ce que**
chaque partie (14, 15) des circuits (3) oscillants récepteurs a un circuit (2) oscillant d'émission distinct.

8. Véhicule (17) ferroviaire,
**caractérisé en ce que**
le véhicule (17) ferroviaire comprend au moins un dispositif (1) capteur suivant l'une des revendications précédentes.

9. Ensemble (18) capteur,
comprenant au moins un objet (11) et au moins un dispositif (1) capteur pour la détection d'une variation du champ magnétique, qui est provoquée par l'objet (11) se rapprochant du dispositif (1) capteur,
**caractérisé en ce que**
le dispositif (1) capteur est constitué suivant l'une des revendications 1 à 7 précédentes.

10. Ensemble (18) capteur suivant la revendication 9,
**caractérisé en ce que** l'
objet (11) est en un matériau plat de type plaque ayant une grande perméabilité magnétique.
